# FASCICULE DE BREVET EUROPEEN

(11) **EP 2 745 989 B1**
(45) Date de publication et mention de la délivrance du brevet: **20.07.2016**
(21) Numéro de dépôt: 13198167.2
(22) Date de dépôt: 18.12.2013
(51) Int. Cl.: G01L 5/00, B23P 19/04, B23Q 17/22, G01L 5/24

(54) **Procédé de contrôle d'un assemblage et dispositif associé**
Kontrollverfahren einer Verbundanordnung, und entsprechende Vorrichtung
Method for monitoring an assembly and related device

(30) Priorité: 20.12.2012 FR 1262503
(43) Date de publication de la demande: 25.06.2014
(73) Titulaire: Airbus Operations, 31060 Toulouse (FR)
(72) Inventeur: Sartor, Marc, 31400 Toulouse (FR); Morgue, Patricia, 31770 Colomiers (FR); Paredes, Manuel, 31130 Balma (FR)
(74) Mandataire: Santarelli

(56) Documents cités:
- FR-A1- 2 813 390
- GB-A- 2 096 361
- US-A- 4 344 216
- US-A- 4 530 143
- US-A- 4 685 050
- US-A1- 2001 037 550

## Description

La présente invention concerne un procédé de contrôle permettant de détecter un défaut d'accostage entre deux éléments à assembler.

Elle concerne plus particulièrement un procédé directement intégré à un processus normal d'installation de fixation pour réaliser un assemblage entre deux éléments (fixations structurales, épingles, etc.), comme par exemple décrit dans US 4, 685, 050.

Du fait des montées en cadences, les usines de production sont de plus en plus poussées à utiliser des moyens permettant gains de temps et de cycles sur des gammes d'assemblage déjà bien optimisées. Une des clés de la qualité des assemblages, notamment pour la durée de vie en fatigue, est l'assurance d'un contact entre les éléments assemblés ainsi que l'absence de lubrifiant, pollution, déformation ou défauts liés au perçage à l'interface entre les éléments. Le contrôle de cette qualité tend à se complexifier du fait de nouvelles pratiques qui se généralisent avec notamment la suppression de certaines tâches, ou étapes, des gammes d'assemblage dites tâches de référence.

En effet, les gammes traditionnelles permettant d'assurer une bonne qualité d'assemblage sont définies par les tâches suivantes : mise en position des éléments, phase de perçage, séparation des éléments (dégroupage), ébavurage, nettoyage, application du mastic, mise en position des éléments (regroupage) et installation des fixations.

Des gammes dites « sans dégroupage » sont de plus en plus utilisées pour assurer les montées en cadence. A titre d'exemple une de ces gammes est définie par les tâches suivantes : application du mastic, mise en position des éléments, phase de perçage et installation des fixations.

Bien qu'elles permettent un gain de temps notable, les gammes « sans dégroupage » sont susceptibles de générer plus de défauts. A titre d'exemple, sur une gamme traditionnelle la présence de bavures peut être contrôlée lors de l'opération de dégroupage et supprimée avant regroupage, ce qui n'est pas possible dans une gamme sans dégroupage.

Selon un autre exemple, de la pollution à l'huile de coupe est parfois générée lors du perçage. En effet, sur une gamme traditionnelle les perçages sont réalisés avant dégroupage, les interfaces sont nettoyées avant réassemblage et avant application du mastic, donc la qualité de l'interface sera indépendante du taux de pollution générée. Avec une gamme sans dégroupage, les perçages peuvent être réalisés après applications de mastic pendant le temps de travail de celui-ci (on parle de mastic frais), le mastic est alors à un stade de viscosité qui peut permettre une infiltration de l'huile de coupe à l'interface.

Selon encore un autre exemple le contact entre les éléments doit impérativement être assuré pour éviter des pertes de pré-tension des fixations dans le temps, impactant la tenue en fatigue de l'assemblage. Sur une gamme traditionnelle, un épinglage à 100% des alésages est réalisé jusqu'à polymérisation du mastic intercalaire, alors que pour une gamme sans dégroupage un resserrage est demandé quand les fixations définitives sont installées sur mastic frais afin d'assurer un fluage du mastic satisfaisant pour avoir le contact « métal-métal » demandé, ou du moins élément contre élément.

Ainsi les gammes « sans dégroupage » sont généralement « aveugles » dans le sens où il n'est pas possible de contrôler de manière non destructive la qualité de l'interface (autrement dit l'épaisseur de mastic au droit de fixations, la présence de copeaux, bavures, huile de coupe, jeux, déformations ou pollution en général). Ces nouvelles gammes sans dégroupage sont donc validées au cas par cas par le biais d'essais de désassemblage réalisés ponctuellement. Ces essais ne peuvent pas être génériques et sont à réaliser zone par zone et même atelier par atelier tant les géométries et rigidités des éléments (selon que l'on est à un stade d'assemblage de petits éléments entre eux ou de gros sous-ensembles comme par exemple en FAL, acronyme anglo-saxon pour « Final Assembly Line » désignant une ligne d'assemblage final) ainsi que les moyens mis en oeuvre (perçage, épinglage, bâtis) ont leur importance sur la qualité finale. Sont alors contrôlés les défauts ou pollutions présents aux interfaces de manière visuelle.

Ces essais nécessitent ainsi une gamme réfléchie et figée au préalable, ils sont consommateurs de temps et d'énergie et comportent des risques lors, par exemple, de la manutention de panneaux en guise d'éléments (chocs, endommagement liés à la polymérisation du mastic, endommagement des alésages/fixations, réalignement des alésages...). En outre ils ne permettent pas d'assurer le maintien de la qualité de l'assemblage dans le temps puisqu'ils ne présentent qu'une image à un instant t. La dérive des conditions de mise en oeuvre introduit un risque de non-conformité qui devient réel dans le cas où l'on ne contrôle plus directement et systématiquement les exigences liées aux interfaces.

Pour résoudre au moins en partie les problèmes précités, est proposé, un procédé de contrôle de qualité d'un accostage d'au moins un premier élément et un deuxième élément d'un assemblage par un moyen de fixation à double accès, comprenant les tâches suivantes :
- Une tâche de mesure d'un premier paramètre par un premier moyen de mesure, ce premier paramètre étant choisi parmi un paramètre en déplacement d'au moins une première partie du moyen de fixation à double accès, un paramètre en effort d'assemblage ou un couple ;
- Une tâche de mesure d'un deuxième paramètre par un deuxième moyen de mesure, ce deuxième paramètre étant choisi parmi le paramètre en déplacement d'au moins la première partie du moyen de fixation à double accès, le paramètre en effort d'assemblage, et le couple, et le deuxième paramètre étant différent du premier paramètre ;
- Une tâche de calcul d'une valeur d'une dérivée première d'une fonction représentant une évolution du deuxième paramètre par rapport au premier paramètre par un moyen de traitement de l'information adapté ;
- Une tâche d'analyse de la valeur de la dérivée première calculée par le moyen de traitement de l'information adapté pour vérifier l'accostage entre au moins le premier élément et le deuxième élément à assembler.

Selon un mode de mise en oeuvre particulièrement avantageux, la tâche d'analyse comporte une détection de changement de comportement de l'assemblage traduit par des variations de pente de la fonction reliant les deux paramètres considérés, la fonction représentant l'évolution du deuxième paramètre par rapport au premier paramètre comportant une phase d'accostage dans laquelle la pente de la courbe est alors proche de zéro, une phase de serrage, et une éventuelle phase intermédiaire relative à la présence d'un éventuel écartement résiduel entre le premier élément et le deuxième élément de l'assemblage.

Un tel procédé permet ainsi de vérifier l'accostage entre deux ou plusieurs éléments d'un assemblage. Dans un cas réel, on entend ainsi par accostage entre deux ou plusieurs éléments, l'accostage du moyen de fixation à double accès sur les éléments à assembler dans un premier temps, puis la mise en contact des éléments entre eux (la phase intermédiaire), c'est-à-dire l'élimination des écartements résiduels éventuels, dans un second temps. Dans la suite de cet exposé, la phase d'accostage à proprement parler vise la mise en contact du moyen de fixation à double accès avec les éléments à assembler. Et lorsque l'accostage en général, soit l'accostage entre les éléments, est considéré, ceci regroupe à la fois la phase d'accostage précitée, et la phase intermédiaire.

Ainsi, si la phase intermédiaire n'est pas détectée, alors que par exemple la pente de la phase de serrage est correcte, l'accostage est correct ; mais si cette phase intermédiaire est détectée, elle est représentative d'un jeu existant entre les éléments à assembler ; l'assemblage étant alors correct si la pente de serrage est conforme aux attentes, sinon, un problème lié à l'accostage est détecté.

On entend ici par moyen de fixation à double accès, un moyen de fixation pour lequel on accède aux deux parties pour réaliser la fixation.

Le paramètre en déplacement d'au moins la première partie du moyen de fixation à double accès est par exemple mesuré directement sur le moyen de fixation, ou par exemple en mesurant le déplacement d'un outil d'installation du moyen de fixation à double accès, c'est-à-dire par exemple d'une pointe utile de l'outil, ce qu'il est possible de directement relier au déplacement d'une première partie du moyen de fixation à double accès. Par exemple, dans un cas où la fixation est un ensemble vis-écrou, l'outil est alors une visseuse comprenant une douille, dont une pointe coopère avec une partie de l'écrou ; le déplacement d'une partie de l'écrou est directement relié à l'avancée de la douille ou son nombre de tours. Ou encore, par exemple, en mesurant un temps d'assemblage pour un assemblage à vitesse contrôlée, ce qui permet de mesurer indirectement le déplacement d'au moins la première partie du moyen de fixation à double accès.

Il est ainsi possible de déterminer, par exemple un écartement relatif des deux parties du moyen de fixation à double accès, par exemple du type vis/écrou ou tige/bague, comme par exemple le déplacement d'une partie de la vis par rapport à un écrou correspondant si la fixation est une vis, ou un angle de rotation de la première partie du moyen de fixation à double accès par rapport à une deuxième partie du moyen de fixation à double accès, par exemple l'angle de rotation d'une vis par rapport à son écrou. Selon un exemple de mise en oeuvre, le premier paramètre correspond à l'écartement relatif entre la première partie et une deuxième partie du moyen de fixation à double accès, déterminé par une mesure du déplacement de la première partie du moyen de fixation à double accès d'une part, et une mesure du déplacement de la deuxième partie du moyen de fixation à double accès d'autre part.

Il en est de manière analogue pour les autres paramètres précités.

L'effort d'assemblage comprend l'effort lié à l'opération d'assemblage au cours du procédé, ou une pré-tension au sein de l'assemblage une fois le procédé terminé.

L'effort d'assemblage ou le couple dans le cas de vissage par exemple, sont de préférence déterminé au sein de l'outil d'installation du moyen de fixation à double accès.

Il est ainsi possible de constituer de très nombreux binômes. Des binômes particulièrement intéressants étant par exemple le binôme couple-pré-tension, ou encore le binôme couple-angle. Et bien sûr, il est possible d'analyser le premier de ces paramètres en fonction du second, ou inversement.

Un tel procédé permet ainsi d'utiliser et de surveiller des informations générées lors de la pose des fixations, c'est-à-dire lors d'un assemblage. Chacune des tâches peut ainsi être réalisée en temps réel ou non, au choix de l'utilisation ou selon l'application.

La dérivée première représente une pente de la fonction à chaque instant, c'est-à-dire en chaque point d'une courbe de la fonction.

Des changements de rigidité, ou dans un cadre plus général, de comportement de l'assemblage, traduits par des variations de la pente de la fonction reliant les deux paramètres considérés, peuvent être détectés via l'analyse de paramètres de serrage, ou d'installation de fixations serties par exemple. Ces changements de rigidité sont caractéristiques d'une phase d'accostage, c'est-à-dire du contact entre les éléments, de la présence de jeux, de défauts d'interface ou de la déformation des éléments. Ainsi l'analyse de ces paramètres permet la mise en place d'un moyen non destructif de contrôle des interfaces et transparent pour les ateliers car directement intégré au processus normal d'installation des fixations (fixations structurales, épingles, etc...) donc sans pénalisation du cycle. En outre, ce procédé permet un contrôle dans le temps et, par là même, la réduction de probabilité d'occurrence de non conformités et possibilité pour la gamme d'assemblage d'évoluer dans le temps.

Selon un exemple de mise en oeuvre pour vérifier un état d'accostage, la tâche d'analyse de la dérivée première comprend une tâche de comparaison par le moyen de traitement de l'information adapté, de la valeur de la dérivée première à une valeur prédéterminée. La valeur prédéterminée est par exemple préenregistrée, déterminée au préalable, par exemple, par mesure sur des assemblages tests pour des éléments dont l'accostage a été vérifié, ou par calculs ou simulations.

Ainsi, par exemple, si la valeur de la dérivée première est égale à la valeur prédéterminée, ou du moins comprise dans une zone de tolérance par rapport à la valeur prédéterminée, alors il y a contact entre les éléments, l'accostage est correct ; sinon, l'accostage est incorrect, l'assemblage étant par exemple dans une phase de rattrapage de jeu.

Selon un autre exemple de mise en oeuvre de l'invention, la tâche d'analyse de la dérivée première comprend une alternative ou un complément à la tâche de comparaison de la dérivée première, à savoir une étape de détection par le moyen de traitement de l'information adapté, d'un premier point d'inflexion sur une courbe représentant une évolution du deuxième paramètre par rapport au premier paramètre, le premier point d'inflexion étant caractéristique de l'accostage des premier et deuxième éléments à assembler, et plus particulièrement ici de l'accostage d'une partie du moyen de fixation à double accès sur un des éléments à assembler. L'accostage de l'autre partie du moyen de fixation à double accès étant réalisé au moment d'une mise en position de la fixation à double accès.

Par exemple, la tâche d'analyse de la dérivée première comprend une étape de détection par le moyen de traitement de l'information adapté, d'un deuxième point d'inflexion, noté point (P), sur une courbe représentant une évolution du deuxième paramètre par rapport au premier paramètre, le deuxième point d'inflexion étant le point à partir duquel s'établit la phase de serrage.

Les principaux point d'inflexion présents sur la courbe sont ici nommés premier et deuxième pour les identifier, mais le deuxième n'est pas subordonné au premier.

Ainsi, le procédé comporte une étape d'identification de la phase d'accostage, qui est une première phase dans laquelle le moyen de fixation à double accès vient en contact avec le premier et le deuxième élément à assembler, une étape d'identification de l'éventuelle phase intermédiaire dans laquelle l'écartement résiduel éventuellement présent entre les deux éléments à assembler lié à leurs éventuels défauts de planéité est compensé jusqu'à ce que les éléments à assembler soient en contact plan sur plan, et une étape d'identification de la phase de serrage dans laquelle la pente peut être reliée aux paramètres matériaux des éléments à assembler. Le premier point d'inflexion est ainsi défini entre la phase d'accostage et la phase intermédiaire, et le deuxième point d'inflexion est défini entre la phase intermédiaire et la phase de serrage. Ces phases se distinguent notamment sur un graphe de par le fait que la pente, c'est-à-dire la dérivée, est croissante d'une phase à l'autre.

L'identification de ces différentes phases permet ainsi de contrôler l'accostage entre les éléments à assembler, et aussi de le caractériser.

De plus, les pentes relatives à ces trois phases sont par exemple telles que la pente de la phase de serrage est supérieure à la pente de la phase intermédiaire, elle-même supérieure à la pente de la phase d'accostage, ou alors telle que la pente de la phase de serrage est inférieure à la pente de la phase intermédiaire, elle-même inférieure à la pente de la phase d'accostage selon les paramètres choisis. Autrement dit, la pente de la phase intermédiaire est comprise entre la pente de la phase d'accostage et la pente de la phase de serrage.

Selon un aspect additionnel intéressant, le procédé comprend en outre une tâche de comparaison d'au moins l'un du premier et du deuxième paramètre à au moins un seuil prédéterminé correspondant, et la tâche de calcul de la valeur de la dérivée première est réalisée une fois le seuil atteint.

Cela permet notamment d'avoir à éviter de réaliser la tâche de calcul de la dérivée première, et la tâche de comparaison à la valeur prédéterminée le cas échéant, pendant tout le procédé d'assemblage. Le seuil est par exemple défini comme 80%, voire 90% ou plus d'une valeur cible du paramètre correspondant à laquelle l'assemblage est considéré comme correct. Ceci permet alors de s'assurer qu'un niveau d'assemblage a été atteint, par exemple qu'il est suffisamment serré, parallèlement au contrôle des défauts d'assemblage, i.e. à la détection d'un accostage incorrect par la détection des jeux par exemple. Par exemple, lors d'un assemblage par fixation fileté de type vis, on considère que l'assemblage est correct si le couple vaut 1, alors la valeur seuil vaut par exemple 0,8 ; dès que cette valeur est atteinte, la dérivée première est calculée pour s'assurer que l'accostage entre les éléments à assembler est validé.

Selon un exemple avantageux de mise en oeuvre, le procédé comprend en outre une tâche d'émission de signal attestant de la validité de l'accostage, par exemple si ladite valeur de la dérivée première présente avec la valeur prédéterminée une différence inférieure à une tolérance donnée par rapport à la valeur prédéterminée.

Cette émission de signal est par exemple visuelle ou sonore. Il est ainsi possible de s'assurer facilement que l'accostage est correctement réalisé, ou non.

Il est notamment possible d'asservir (ou piloter) l'assemblage selon l'un des paramètres du binôme.

Selon un autre aspect de la présente invention, est aussi proposé un dispositif de contrôle de qualité d'un accostage d'au moins un premier élément et un deuxième élément d'un assemblage par un moyen de fixation à double accès, pour la mise en oeuvre d'un procédé tel que défini précédemment, caractérisé en ce qu'il comprend :
- un outil d'installation du moyen de fixation à double accès pour réaliser l'assemblage entre au moins le premier élément et le deuxième élément,
- un premier moyen de mesure pour mesurer un premier paramètre choisi parmi un paramètre en déplacement d'au moins une première partie du moyen de fixation à double accès, un paramètre en effort d'assemblage ou un couple,
- un deuxième moyen de mesure pour mesurer un deuxième paramètre choisi parmi le paramètre en déplacement d'au moins la première partie du moyen de fixation à double accès, le paramètre en effort d'assemblage, et le couple, le deuxième paramètre étant différent du premier paramètre,
- un moyen de traitement de l'information adapté permettant de calculer une valeur d'une dérivée première d'une fonction représentant une évolution du deuxième paramètre par rapport au premier paramètre et analyser la valeur de la dérivée première pour vérifier l'accostage entre au moins le premier élément et le deuxième élément à assembler.

Il permet aussi par exemple d'identifier une phase d'accostage, une éventuelle phase intermédiaire et une phase de serrage.

Un tel dispositif permet ainsi de détecter un accostage incorrect, par exemple par la détection des jeux. Lorsque au moins deux éléments sont assemblés avec un outil d'installation du moyen de fixation à double accès permettant d'installer une fixation entre un premier élément et un deuxième élément, par exemple de type visseuse, deux paramètres différents, comme par exemple le couple et l'angle, sont mesurés. Ces paramètres sont ensuite traités par le moyen de traitement de l'information adapté, par exemple pour les comparer à des valeurs prédéterminées. Cette comparaison permet de détecter des accostages incorrects suivant la différence entre la valeur de la dérivée première, issue des valeurs mesurées, et une valeur prédéterminée, préenregistrée, représentative d'un assemblage accosté.

Bien entendu, selon un exemple de réalisation, le moyen de traitement de l'information adapté est aussi apte à détecter un point d'inflexion sur une courbe représentant l'évolution simultanée des deux paramètres mesurés, le point d'inflexion étant caractéristique notamment de l'accostage des éléments à assembler.

Selon un mode de réalisation envisageable, le dispositif comprend un troisième moyen de mesure pour mesurer un troisième paramètre choisi parmi le paramètre en déplacement d'au moins la première partie du moyen de fixation à double accès, le paramètre en effort d'assemblage, et le couple, et étant différent du premier paramètre et du deuxième paramètre.

Avec trois moyens de mesure, il est alors possible de réaliser plusieurs binômes de paramètres pour corroborer les analyses, et par exemple effectuer des analyses parallèles pour s'assurer au moins de la qualité de l'accostage.

Selon un autre exemple, le dispositif comprend en outre un système d'émission de signal permettant de savoir si au moins l'accostage est correct. Le système d'émission de signal présente, selon un exemple de réalisation, des informations dissociées selon que l'accostage seul est correct, ou bien que l'assemblage complet est correct, impliquant alors que l'accostage est correct.

Selon un mode de réalisation envisageable, l'outil d'installation du moyen de fixation à double accès comprend au moins l'un du premier et du deuxième moyen de mesure.

Selon encore un autre mode de réalisation envisageable, l'outil d'installation du moyen de fixation à double accès comprend le moyen de traitement de l'information adapté.

En effet, le moyen de traitement de l'information adapté peut être intégré à l'outil d'installation de fixation ou être intégré à un outil indépendant qui reprendrait les mesures faites par les moyens de mesure correspondants, intégrés ou non à l'outil d'installation de fixation.

L'outil indépendant ou l'outil d'installation du moyen de fixation à double accès modifié comprend par exemple le système d'émission de signal, par exemple un système de visualisation en cas de détection d'un accostage incorrect. De préférence, le système d'émission de signal comprend un système de visualisation comprenant une diode rouge et une diode verte.

De la sorte, tant que la diode est rouge, l'assemblage n'est pas correct, par exemple la phase d'accostage n'est pas terminée, et/ou l'assemblage n'est pas assez serré. Le système de visualisation est par exemple couplé d'un signal sonore.

Selon encore un autre exemple de réalisation, l'un du premier élément et du deuxième élément de l'assemblage comprend un trou taraudé et compose au moins une deuxième partie du moyen de fixation à double accès apte à coopérer avec la première partie du moyen de fixation à double accès, qui dans ce cas est par exemple une vis. Par exemple, l'autre élément comprend alors un alésage tel qu'une tige de vis passe par l'alésage et vient se fixer dans le trou taraudé.

L'invention, selon un exemple de réalisation de l'invention, sera bien comprise et ses avantages apparaitront mieux à la lecture de la description détaillée qui suit, donnée à titre illustratif et nullement limitatif, en référence aux dessins annexés dans lesquels :
La figure 1 présente schématiquement un exemple d'une configuration théorique initiale de serrage sans défaut, étant par exemple à l'origine de la courbe de la figure 2 ;
La figure 2 est un graphe présentant une courbe théorique d'un serrage sans défaut, tel qu'illustré sur la figure 1 ;
La figure 3 présente schématiquement un exemple d'une configuration théorique initiale de serrage avec écartement résiduel, étant par exemple à l'origine de la courbe de la figure 4 ;
La figure 4 est un graphe présentant une courbe théorique d'un serrage avec un écartement résiduel ;
La figure 5 est un graphe présentant des courbes réalistes d'un assemblage sans défaut (courbe 7) d'un assemblage avec un défaut comblé en fin de serrage (courbe 8), et d'un assemblage avec un défaut non comblé en fin de serrage (courbe 9) ; et
La figure 6 représente un logigramme schématique d'un exemple de mise en oeuvre du procédé selon un aspect de l'invention.

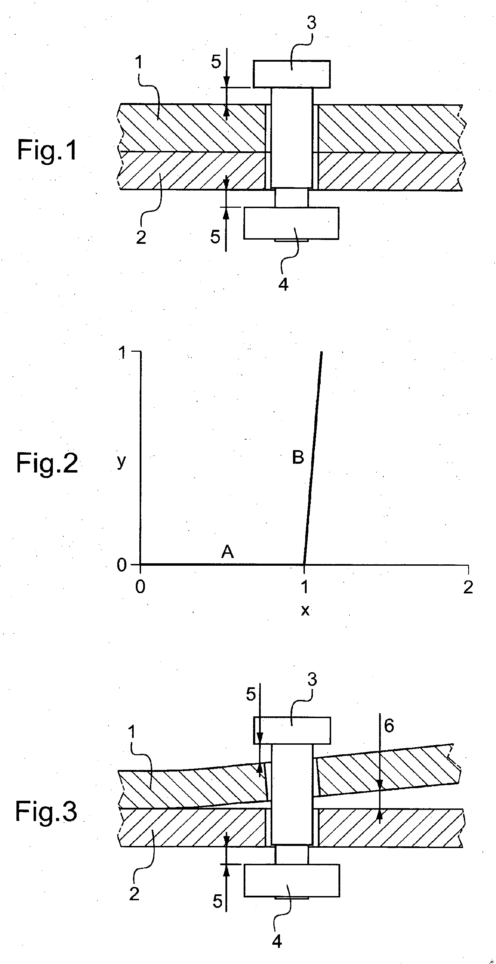

La description détaillée qui suit présente le procédé selon un exemple de mise en oeuvre basé sur un mode de réalisation présentant un binôme « couple - angle », lors du serrage d'un élément fileté. Bien entendu, cette description est tout aussi valable pour un binôme pré-tension - couple, ou effort - déplacement relatif, ou toute combinaison parmi les paramètres mentionnés précédemment. Un assemblage, schématisé sur les figures 1 et 3, comprend un premier élément 1 et un deuxième élément 2, reliés par une vis 3 et un écrou 4, formant le moyen de fixation à double accès. Un jeu 5 est initialement présent, ici entre le premier élément 1 et la vis 3, ainsi qu'entre le deuxième élément 2 et l'écrou 4.

Ainsi, lors d'un serrage sans défaut, représenté par exemple figure 1, une courbe théorique couple-angle se présente selon un graphe représenté sur la figure 2, sur lequel l'abscisse (x) représente l'angle, et l'ordonnée (y) représente le couple.

En phase d'accostage A (avant contact de la vis et de l'écrou avec les éléments 1, 2), l'angle (x) augmente sans que le couple (y) n'évolue (il reste sensiblement égal à zéro). La pente de cette portion A de la courbe est alors proche de zéro.

En phase de serrage B, après que les jeux initiaux 5 aient été éliminés, les éléments 1, 2 en contact forment une chaîne fermée et, lorsque l'écrou 4 continue de tourner, et donc de progresser le long de la vis 3 de par le système vis 3 - écrou 4, ces éléments 1, 2 sont mis sous contraintes croissantes : la fixation connaît un état principal de tension alors que les éléments 1, 2 assemblés se trouvent comprimés. Le déplacement de l'écrou 4 le long de la vis 3 étant directement lié à son angle de rotation, on observe une évolution linéaire du couple en fonction de l'angle. La pente de cette droite (portion B), c'est-à-dire une dérivée première de cette fonction, est directement dépendante des raideurs des composants impliqués dans la chaine de contrainte, principalement celles du moyen de fixation (ici vis 3 - écrou 4) et des éléments serrés 1, 2.

Ainsi, dans un cas théorique parfait, une fois les jeux 5 rattrapés, c'est-à-dire l'accostage réalisé, la pente vaut une valeur prédéterminée (ou du moins est comprise dans une zone de tolérance relative à celle-ci), et le serrage est de préférence perpétué jusqu'à ce que le couple ait atteint une valeur (ici valant 1 à titre d'exemple) assurant un certain niveau de serrage.

Dans une configuration ou l'assemblage présente un écartement résiduel 6, par exemple illustré figure 3, la courbe couple (y) - angle (x) connaît des changements de pente représentatifs de phases intermédiaires, par exemple quand une chaine de surfaces en contact s'établit avant que la zone de la portée théorique des éléments 1, 2 à serrer connaisse le plein contact plan sur plan normalement attendu. Il existe alors une phase intermédiaire C où les contraintes de serrage servent d'abord « à éliminer » des écartements résiduels 6 et atteindre un contact plan sur plan, au droit de la fixation, avant de rentrer dans la phase de serrage B proprement dite. Les raideurs (ou pentes) rencontrées durant la phase intermédiaire C sont généralement très différentes de celle qui caractérise la phase de serrage B, plein contact. Cette dernière (la pente en phase B) reste très proche de la pente rencontrée dans le cas théorique.

Ainsi, le procédé selon un exemple de mise en oeuvre de l'invention, exploite ces variations de pente ou dérivée première d'une évolution de deux paramètres, ici illustré par le binôme couple - angle.

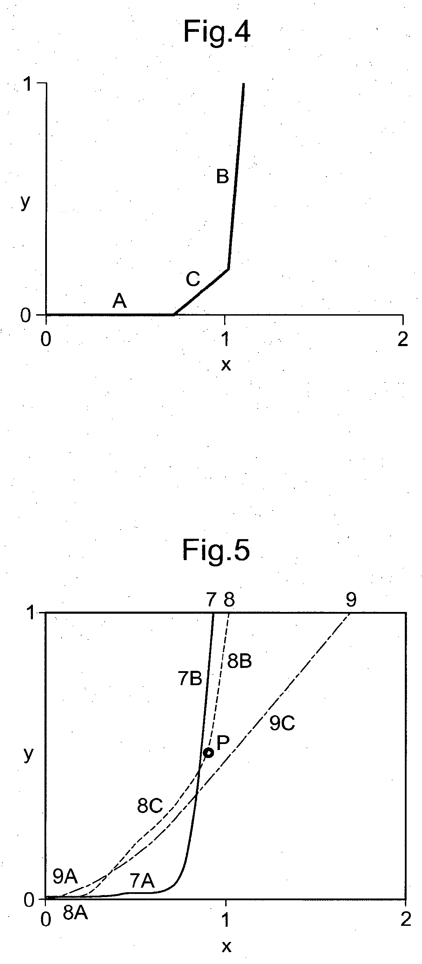

La figure 4 montre un exemple d'évolution du couple (en ordonnée y) en fonction de l'angle (en abscisse x) dans le cas où il existe une phase intermédiaire C durant laquelle la portée plan sur plan des éléments 1, 2 à serrer, au droit de la fixation, n'est pas encore établie à cause de la présence de l'écartement résiduel 6, traduisant un défaut de planéité des éléments 1, 2 par exemple.

Après une phase d'accostage A (similaire au cas théorique sans défaut précédemment présenté), une phase intermédiaire C, i.e. une phase de rattrapage voire d'élimination de l'écartement local résiduel 6, intervient. Par exemple, si les éléments 1, 2 à serrer se trouvent pré-positionnés dans une configuration où ils ne sont pas tout-à-fait parallèles, et écartés d'un petit espace au droit de la fixation, i.e. de l'écartement résiduel 6, alors qu'une chaine de contact est établie par ailleurs, alors les éléments 1, 2 à serrer sont sollicités principalement en flexion dans un premier temps, avant de se voir comprimés (serrage effectif) une fois l'écartement résiduel 6, local, éliminé. Dans la phase intermédiaire C, la raideur des éléments que doit vaincre la fixation est bien inférieure à celle présente dans la phase de serrage B. La pente (i.e. dérivée première) de la courbe couple - angle durant la phase intermédiaire C est bien inférieure à celle de la phase de serrage B effectif.

D'un point de vue pratique, lors de la phase d'accostage, un outil d'installation du moyen de fixation à double accès, en l'occurrence une visseuse de par la présence du système vis 3 - écrou 4, doit produire, généralement, un petit couple pour vaincre un certain nombre de forces résistantes déjà présentes, comme celles liées au frottement entre les filets de la vis 3 et de l'écrou 4. Le réglage du zéro en angle de la visseuse présente ainsi une forte dispersion. L'analyse de la dérivée première (ou pente de la courbe couple - angle) qui caractérise la phase de serrage B effectif permet de pallier ce problème.

Ainsi, pour la mise en oeuvre d'un tel procédé, est aussi proposé la conception d'un système de contrôle qui, s'appuyant sur l'analyse des pentes d'une courbe illustrant des dépendances de variation entre deux paramètres (en l'occurrence de la courbe couple - angle) est capable de déterminer si les conditions d'un accostage validé sont établies. On considère que, si la pente dans la dernière partie de la courbe couple - angle (phase de serrage B) possède une valeur égale à une valeur prédéterminée, ou qui s'inscrit dans une fourchette donnée autour de la valeur prédéterminée attendue, alors le contact plan sur plan des éléments 1, 2 à serrer est bien présent au droit de la fixation. Le réglage initial du système requiert une évaluation de la valeur de la pente attendue. Cette évaluation peut être réalisée pratiquement par le biais de calculs théoriques, mais aussi par le biais d'un serrage en conditions réelles où on se sera attaché préalablement à éliminer tous les défauts significatifs. Autrement dit, lors du serrage d'une fixation, la collecte des informations couple - angle (selon le présent exemple) permet, de déterminer si la valeur prédéterminée de pente (ou dérivée première) a été obtenue en fin de serrage. L'information de validité ou non-validité peut être délivrée à l'utilisateur via un indicateur: par exemple vert pour signaler que l'accostage est valide, rouge pour signaler un accostage non valide.

La figure 5 présente trois courbes. Une courbe 7, représentative d'un cas proche du cas théorique sans défaut, présente une première portion 7A traduisant une phase d'accostage suivie d'une portion 7B traduisant une phase de serrage. Une courbe 8 est représentative d'un cas comprenant un défaut (un écartement résiduel 6 par exemple) où le défaut est comblé en fin de serrage. La courbe 8 présente alors une portion 8A, ici relativement courte, traduisant l'accostage du moyen de fixation avec les pièces à assembler, une portion 8C traduisant un rattrapage de jeu ou autres défauts, par exemple pendant laquelle un écartement résiduel 6 est comblé, et enfin une portion 8B traduisant le serrage effectif, jusqu'à ce que l'installation de fixation soit terminée. Enfin, une courbe 9 est représentative d'un cas comprenant un défaut (un écartement résiduel 6 par exemple) où le défaut n'est pas comblé en fin de serrage. La courbe 9 présente alors une portion 9A, ici relativement courte, traduisant l'accostage du moyen de fixation avec les pièces à assembler, et une portion 9C traduisant un rattrapage de jeu ou autres défauts. Or, lorsque l'installation est terminée et une valeur prédéterminée de pente n'est toujours pas atteinte, la phase intermédiaire 9C n'est pas terminée.

En d'autres termes, les courbes 7 et 8 présentent une dérivée première environ égale à la valeur prédéterminée en fin d'installation de fixation, c'est-à-dire que le contact plan sur plan des éléments 1, 2 à serrer au droit de la fixation a bien été atteint, et un serrage effectif entre les deux éléments 1, 2 a été installé.

La courbe 9 ne présente pas une pente suffisante en fin de serrage, ce qui signifie que les conditions d'un accostage entre pièces conforme aux attentes n'ont pas été atteintes. Le fait de collecter en temps réel les informations de couple et d'angle peut également permettre un retour d'information enrichi vers l'utilisateur. Par exemple, sur la courbe 8, rechercher un point d'inflexion (point P) à partir duquel s'établit la pente, dont la dérivée correspond à une valeur comprise dans une zone de tolérance autour de la valeur prédéterminée, permet de mieux caractériser la valeur du serrage effectif installé entre les deux éléments 1, 2 serrés. Plus le point d'inflexion P est situé à un couple faible, plus la valeur du serrage effectif est importante, et se rapproche du cas sans défaut, donc plus le serrage s'est avéré performant.

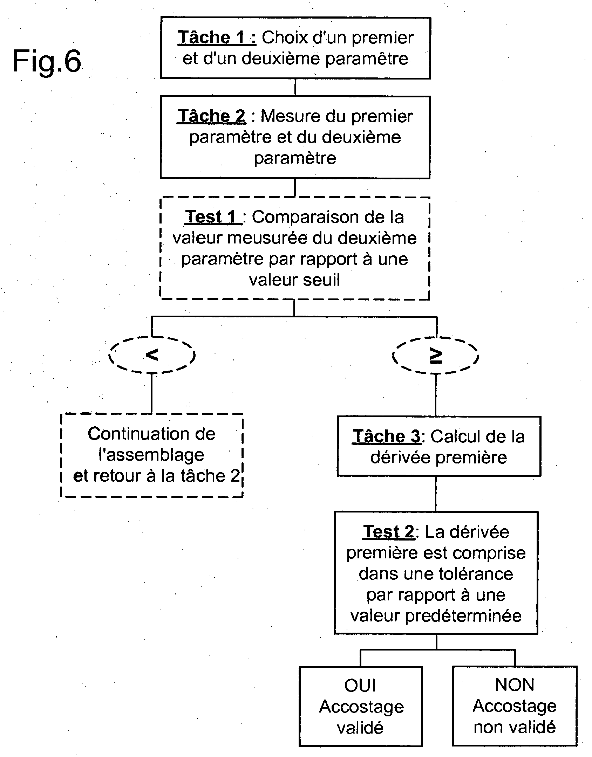

Le logigramme de la figure 6 permet d'illustrer un exemple de mise en oeuvre du procédé selon l'invention, quels que soient les paramètres choisis. Le logigramme propose ainsi un exemple de séquençage de tâches selon un exemple de mise en oeuvre de l'invention, et bien entendu, d'autres séquençages peuvent être établis.

Selon l'exemple de la figure 6, une fois des éléments 1, 2 mis en place avec une fixation, quelle qu'elle soit, une première tâche (tâche 1) consiste à choisir le premier paramètre et le deuxième paramètre, différent du premier, selon les listes décrites précédemment.

A un premier pas d'assemblage, la tâche 2 est réalisée et consiste à mesurer les valeurs du premier paramètre et du deuxième paramètre.

Les cadres en pointillés représentent l'insertion de tâches supplémentaires consistant ici à introduire un seuil de valeur pour l'un des paramètres, par exemple le deuxième, afin d'éviter de calculer la dérivée première ou la comparer à la valeur prédéterminée pendant tout le procédé d'assemblage. Ceci permet par exemple de réduire les temps de calculs.

Ainsi, tant que ce seuil n'est pas atteint par l'un des paramètres (test 1), en l'occurrence le deuxième, il faut continuer l'assemblage, par exemple serrer davantage.

Dans une configuration selon laquelle une valeur seuil pour un paramètre n'est pas prise en compte, alors la tâche 3 est directement réalisée (les cadres en pointillés n'existent pas). Cela signifie que le calcul de la dérivée première a lieu en permanence au cours de l'assemblage. Un test 2 est ensuite appliqué. Si la valeur calculée de la dérivée première est comprise dans la zone de tolérance par rapport à la valeur prédéterminée, alors l'accostage est validé, mais en soi l'assemblage n'est pas terminé tant que l'un des paramètres, précédemment mentionné, n'a pas atteint sa valeur cible (c'est-à-dire tant que la valeur de l'un des paramètres n'est pas comprise dans une certaine plage de valeur). On est par exemple dans les cas des courbes 7 ou 8, dans les portions 7B ou 8B, mais pour une valeur de couple inférieure à 1. Sinon, si la valeur calculée de la dérivée première n'est pas comprise dans la zone de tolérance par rapport à la valeur prédéterminée, l'assemblage est encore en phase A ou C, il faut donc continuer de faire varier les paramètres, c'est-à-dire continuer l'assemblage pour accoster les éléments.

Il est en outre possible d'asservir (ou piloter) l'assemblage selon l'un des paramètres du binôme.

Bien sûr, la présente invention ne se limite pas à la description précédente, mais s'étend à toute variante dans le cadre des revendications ci-après.

## Revendications

1. Procédé de contrôle de qualité d'un accostage d'au moins un premier élément (1) et un deuxième élément (2) d'un assemblage par un moyen de fixation à double accès (3, 4), comprenant les tâches suivantes :
- Une tâche de mesure d'un premier paramètre par un premier moyen de mesure, ce premier paramètre étant choisi parmi un paramètre en déplacement d'au moins une première partie du moyen de fixation à double accès (3, 4), un paramètre en effort d'assemblage ou un couple ;
- Une tâche de mesure d'un deuxième paramètre par un deuxième moyen de mesure, ce deuxième paramètre étant choisi parmi le paramètre en déplacement d'au moins la première partie du moyen de fixation à double accès (3, 4), le paramètre en effort d'assemblage, et le couple, et le deuxième paramètre étant différent du premier paramètre ;
- Une tâche de calcul d'une valeur d'une dérivée première d'une fonction représentant une évolution du deuxième paramètre par rapport au premier paramètre par un moyen de traitement de l'information adapté ;
- Une tâche d'analyse de la valeur de la dérivée première calculée par le moyen de traitement de l'information adapté pour vérifier l'accostage entre au moins le premier élément et le deuxième élément à assembler ;
**caractérisé en ce que** la tâche d'analyse comporte une détection de changement de comportement de l'assemblage traduit par des variations de pente de la fonction reliant les deux paramètres considérés, la fonction représentant l'évolution du deuxième paramètre par rapport au premier paramètre comportant une phase d'accostage (A) dans laquelle la pente de la courbe est alors proche de zéro, une phase de serrage (B), et une éventuelle phase intermédiaire (C) relative à la présence d'un éventuel écartement résiduel (6) entre le premier élément (1) et le deuxième élément (2) de l'assemblage.

2. Procédé selon la revendication 1, caractérisé en ce la tâche d'analyse de la dérivée première comprend une tâche de comparaison par le moyen de traitement de l'information adapté, de la valeur de la dérivée première à une valeur prédéterminée.

3. Procédé selon l'une quelconque des revendications 1 et 2, **caractérisé en ce que** la tâche d'analyse de la dérivée première comprend une étape de détection par le moyen de traitement de l'information adapté, d'un premier point d'inflexion sur une courbe représentant une évolution du deuxième paramètre par rapport au premier paramètre, le premier point d'inflexion étant caractéristique de l'accostage des premier et deuxième éléments à assembler.

4. Procédé selon l'une quelconque des revendications 1 à 3, **caractérisé en ce que** la tâche d'analyse de la dérivée première comprend une étape de détection par le moyen de traitement de l'information adapté, d'un deuxième point d'inflexion, noté point (P), sur une courbe représentant une évolution du deuxième paramètre par rapport au premier paramètre, le deuxième point d'inflexion étant le point à partir duquel s'établit la phase de serrage (B).

5. Procédé selon l'une quelconque des revendications 1 à 4, **caractérisé en ce qu'**il comprend en outre une tâche de comparaison d'au moins l'un du premier et du deuxième paramètre à au moins un seuil prédéterminé correspondant, et **en ce que** la tâche de calcul de la valeur de la dérivée première est réalisée une fois le seuil atteint.

6. Procédé selon l'une quelconque des revendications 1 à 5, **caractérisé en ce qu'**il comprend en outre une tâche d'émission de signal attestant de la validité de l'accostage.

7. Dispositif de contrôle de qualité d'un accostage d'au moins un premier élément (1) et un deuxième élément (2) d'un assemblage par un moyen de fixation à double accès (3, 4), pour la mise en oeuvre d'un procédé selon au moins l'une des revendications 1 à 6, **caractérisé en ce qu'**il comprend :
- un outil d'installation du moyen de fixation à double accès (3, 4) pour réaliser l'assemblage entre au moins le premier élément (1) et le deuxième élément (2),
- un premier moyen de mesure pour mesurer un premier paramètre choisi parmi un paramètre en déplacement d'au moins une première partie du moyen de fixation à double accès (3, 4), un paramètre en effort d'assemblage ou un couple,
- un deuxième moyen de mesure pour mesurer un deuxième paramètre choisi parmi le paramètre en déplacement d'au moins la première partie du moyen de fixation à double accès (3, 4), le paramètre en effort d'assemblage, et le couple, le deuxième paramètre étant différent du premier paramètre,
- un moyen de traitement de l'information adapté permettant de calculer une valeur d'une dérivée première d'une fonction représentant une évolution du deuxième paramètre par rapport au premier paramètre et analyser la valeur de la dérivée première pour vérifier l'accostage entre au moins le premier élément et le deuxième élément à assembler et identifier une phase d'accostage (A), une éventuelle phase intermédiaire (C) et une phase de serrage (B).

8. Dispositif selon la revendication 7, **caractérisé en ce qu'**il comprend un troisième moyen de mesure pour mesurer un troisième paramètre choisi parmi le paramètre en déplacement d'au moins la première partie du moyen de fixation à double accès (3, 4), le paramètre en effort d'assemblage, et le couple, et étant différent du premier paramètre et du deuxième paramètre.

9. Dispositif selon l'une quelconque des revendications 7 et 8, **caractérisé en ce qu'**il comprend en outre un système d'émission de signal permettant de savoir si l'accostage est correct.

10. Dispositif selon l'une quelconque des revendications 7 à 9, **caractérisé en ce que** l'outil d'installation du moyen de fixation à double accès (3, 4) comprend au moins l'un du premier et du deuxième moyen de mesure.

11. Dispositif selon l'une quelconque des revendications 7 à 10, **caractérisé en ce que** l'outil d'installation du moyen de fixation à double accès (3, 4) comprend le moyen de traitement de l'information adapté.

12. Dispositif selon l'une quelconque des revendications 7 à 11, **caractérisé en ce que** l'un du premier élément (1) et du deuxième élément (2) de l'assemblage comprend un trou taraudé et compose au moins une deuxième partie du moyen de fixation à double accès apte à coopérer avec la première partie du moyen de fixation à double accès.

## Patentansprüche

1. Verfahren zur Qualitätskontrolle von einer Verbindung von mindestens einem ersten Element (1) und einem zweiten Element (2) einer Verbundanordnung durch ein Befestigungsmittel mit doppeltem Zugang (3, 4), umfassend die folgenden Aufgaben:
- eine Aufgabe des Messens eines ersten Parameters durch ein erstes Messmittel, wobei dieser erste Parameter aus einem Verschiebungsparameter von mindestens einem ersten Teil des Befestigungsmittels mit doppeltem Zugang (3, 4), einem Parameter der Verbindungskraft oder einem Paar ausgewählt wird;
- eine Aufgabe des Messens eines zweiten Parameters durch ein zweites Messmittel, wobei dieser zweite Parameter aus dem Verschiebungsparameter von mindestens dem ersten Teil des Befestigungsmittels mit doppeltem Zugang (3, 4), dem Parameter der Verbindungskraft und dem Paar ausgewählt wird und wobei sich der zweite Parameter von dem ersten Parameter unterscheidet;
- eine Aufgabe des Berechnens eines Wertes einer ersten Ableitung einer Funktion, die eine Entwicklung des zweiten Parameters gegenüber dem ersten Parameter darstellt, durch ein geeignetes Informationsverarbeitungsmittel;
- eine Aufgabe des Untersuchens des Wertes der ersten Ableitung, die durch das Informationsverarbeitungsmittel berechnet wird, das geeignet ist, um die Verbindung zwischen mindestens dem ersten und dem zweiten zu verbindenden Element zu überprüfen;
**dadurch gekennzeichnet, dass** die Aufgabe des Untersuchens ein Erkennen der Änderung des Verhaltens der Verbundanordnung aufweist, die durch Variationen der Steigung der Funktion ausgedrückt wird, die die zwei betreffenden Parameter verbindet, wobei die Funktion die Entwicklung des zweiten Parameters gegenüber dem ersten Parameter darstellt, der eine Phase des Verbindens (A), in der die Steigung der Kurve dann nahezu Null ist, eine Phase des Anziehens (B) und eine eventuelle Zwischenphase (C) in Bezug auf das Vorhandensein eines eventuellen Restabstands (6) zwischen dem ersten Element (1) und dem zweiten Element (2) der Verbundanordnung aufweist.

2. Verfahren nach Anspruch 1, **dadurch gekennzeichnet, dass** die Aufgabe des Untersuchens der ersten Ableitung eine Aufgabe des Vergleichens durch das geeignete Informationsverarbeitungsmittel des Wertes der ersten Ableitung mit einem vorbestimmten Wert aufweist.

3. Verfahren nach einem der Ansprüche 1 und 2, **dadurch gekennzeichnet, dass** die Aufgabe des Untersuchens der ersten Ableitung einen Schritt des Erfassens durch das geeignete Informationsverarbeitungsmittel eines ersten Wendepunkts auf einer Kurve aufweist, die eine Entwicklung des zweiten Parameters gegenüber dem ersten Parameter darstellt, wobei der erste Wendepunkt charakteristisch für das Verbinden des ersten und zweiten zu verbindenden Elements ist.

4. Verfahren nach einem der Ansprüche 1 bis 3, **dadurch gekennzeichnet, dass** die Aufgabe des Untersuchens der ersten Ableitung einen Schritt des Erfassens durch das geeignete Informationsverarbeitungsmittel eines zweiten Wendepunkts, der Punkt (P) genannt wird, auf einer Kurve aufweist, die eine Entwicklung des zweiten Parameters gegenüber dem ersten Parameter darstellt, wobei der zweite Wendepunkt der Punkt ist, von dem aus sich die Phase des Anziehens (B) aufbaut.

5. Verfahren nach einem der Ansprüche 1 bis 4, **dadurch gekennzeichnet, dass** es ferner eine Aufgabe des Vergleichens vom ersten und/oder zweiten Parameter mit mindestens einem entsprechenden vorbestimmten Schwellenwert aufweist und dass die Aufgabe des Berechnens des Wertes der ersten Ableitung durchgeführt wird, sobald der Schwellenwert erreicht wird.

6. Verfahren nach einem der Ansprüche 1 bis 5, **dadurch gekennzeichnet, dass** es ferner eine Aufgabe des Sendens eines Signals aufweist, das die Gültigkeit der Verbindung bestätigt.

7. Vorrichtung zur Qualitätskontrolle von einer Verbindung von mindestens einem ersten Element (1) und einem zweiten Element (2) einer Verbundanordnung durch ein Befestigungsmittel mit doppeltem Zugang (3, 4) zum Umsetzen eines Verfahrens nach mindestens einem der Ansprüche 1 bis 6, **dadurch gekennzeichnet, dass** die Folgendes aufweist:
- ein Werkzeug zur Installation des Befestigungsmittels mit doppeltem Zugang (3, 4), um das Verbinden zwischen mindestens dem ersten Element (1) und dem zweiten Element (2) durchzuführen,
- ein erstes Messmittel, um einen ersten Parameter zu messen, der aus einem Verschiebungsparameter von mindestens einem ersten Teil des Befestigungsmittels mit doppeltem Zugang (3, 4), einem Parameter der Verbindungskraft oder einem Paar ausgewählt ist,
- ein zweites Messmittel, um einen zweiten Parameter zu messen, der aus dem Verschiebungsparameter von mindestens dem ersten Teil des Befestigungsmittels mit doppeltem Zugang (3, 4), dem Parameter der Verbindungskraft und dem Paar ausgewählt ist, wobei sich der zweite Parameter von dem ersten Parameter unterscheidet,
- ein geeignetes Informationsverarbeitungsmittel, das es ermöglicht, einen Wert einer ersten Ableitung einer Funktion, die eine Entwicklung des zweiten Parameters gegenüber dem ersten Parameter darstellt, zu berechnen und den Wert der ersten Ableitung zu untersuchen, um die Verbindung zwischen mindestens dem ersten und dem zweiten zu verbindenden Element zu überprüfen und eine Phase des Verbindens (A), eine eventuelle Zwischenphase (C) und eine Phase des Anziehens (B) zu identifizieren.

8. Vorrichtung nach Anspruch 7, **dadurch gekennzeichnet, dass** sie ein drittes Messmittel aufweist, um einen dritten Parameter zu messen, der aus dem Verschiebungsparameter von mindestens dem ersten Teil des Befestigungsmittels mit doppeltem Zugang (3, 4), dem Parameter der Verbindungskraft und dem Paar ausgewählt ist und sich von dem ersten Parameter und dem zweiten Parameter unterscheidet.

9. Vorrichtung nach einem der Ansprüche 7 und 8, **dadurch gekennzeichnet, dass** sie ferner ein System zum Senden eines Signals aufweist, das es ermöglicht zu erfahren, ob die Verbindung korrekt ist.

10. Vorrichtung nach einem der Ansprüche 7 bis 9, **dadurch gekennzeichnet, dass** das Werkzeug zur Installation des Befestigungsmittels mit doppeltem Zugang (3, 4) das erste und/oder das zweite Messmittel aufweist.

11. Vorrichtung nach einem der Ansprüche 7 bis 10, **dadurch gekennzeichnet, dass** das Werkzeug zur Installation des Befestigungsmittels mit doppeltem Zugang (3, 4) das geeignete Informationsverarbeitungsmittel aufweist.

12. Vorrichtung nach einem der Ansprüche 7 bis 11, **dadurch gekennzeichnet, dass** das erste Element (1) oder das zweite Element (2) der Verbundanordnung ein Gewindeloch aufweist und mindestens einen zweiten Teil des Befestigungsmittels mit doppeltem Zugang bildet, der geeignet ist, mit dem ersten Teil des Befestigungsmittels mit doppeltem Zugang zusammenzuwirken.

## Claims

1. Method for checking the quality of a docking of at least one first element (1) and one second element (2) of an assembly by a dual-access fixing means (3, 4), comprising the following tasks:
- a task of measurement of a first parameter by a first measurement means, this first parameter being chosen from a parameter in terms of displacement of at least one first part of the dual-access fixing means (3, 4), a parameter in terms of assembly load or a torque;
- a task of measurement of a second parameter by a second measurement means, this second parameter being chosen from the parameter in terms of displacement of at least the first part of the dual-access fixing means (3, 4), the parameter in terms of assembly load, and the torque, and the second parameter being different from the first parameter;
- a task of calculation of a value of a first derivative of a function representing a trend of the second parameter relative to the first parameter by an appropriate information processing means;
- a task of analysis of the value of the first derivative calculated by the appropriate information processing means to check the docking between at least the first element and the second element to be assembled;
**characterised in that** the analysis task comprises a detection of change of behaviour of the assembly reflected by variations of slope of the function linking the two parameters considered, the function representing the trend of the second parameter relative to the first parameter comprising a docking phase (A) in which the slope of the curve is then close to zero, a tightening phase (B), and a possible intermediate phase (C) relating to the presence of a possible residual separation (6) between the first element (1) and the second element (2) of the assembly.

2. Method according to claim 1, **characterised in that** the task of analysis of the first derivative comprises a task of comparison, by the appropriate information processing means, of the value of the first derivative to a predetermined value.

3. Method according to either one of claims 1 and 2, **characterised in that** the task of analysis of the first derivative comprises a step of detection, by the appropriate information processing means, of a first point of inflection on a curve representing a trend of the second parameter relative to the first parameter, the first point of inflection being characteristic of the docking of the first and second elements to be assembled.

4. Method according to any one of claims 1 to 3, **characterised in that** the task of analysis of the first derivative comprises a step of detection, by the appropriate information processing means, of a second point of inflection, denoted point (P), on a curve representing a trend of the second parameter relative to the first parameter, the second point of inflection being the point from which the tightening phase (B) is established.

5. Method according to any one of claims 1 to 4, **characterised in that** it further comprises a task of comparison of at least one of the first and second parameters to at least one corresponding predetermined threshold, and **in that** the task of calculation of the value of the first derivative is performed once the threshold is reached.

6. Method according to any one of claims 1 to 5, **characterised in that** it further comprises a task of transmission of a signal attesting to the validity of the docking.

7. Device for checking the quality of a docking of at least one first element (1) and one second element (2) of an assembly by a dual-access fixing means (3, 4), for the implementation of a method according to at least one of claims 1 to 6, **characterised in that** it comprises:
- a tool for installing the dual-access fixing means (3, 4) to produce the assembly between at least the first element (1) and the second element (2),
- a first measurement means for measuring a first parameter chosen from a parameter in terms of displacement of at least one first part of the dual-access fixing means (3, 4), a parameter in terms of assembly load or a torque,
- a second measurement means for measuring a second parameter chosen from the parameter in terms of displacement of at least the first part of the dual-access fixing means (3, 4), the parameter in terms of assembly load, and the torque, the second parameter being different from the first parameter,
- an appropriate information processing means making it possible to calculate a value of a first derivative of a function representing a trend of the second parameter relative to the first parameter and analysing the value of the first derivative to check the docking between at least the first element and the second element to be assembled and identify a docking phase (A), a possible intermediate phase (C) and a tightening phase (B).

8. Device according to claim 7, **characterised in that** it comprises a third measurement means for measuring a third parameter chosen from the parameter in terms of displacement of at least the first part of the dual-access fixing means (3, 4), the parameter in terms of assembly load, and the torque, and being different from the first parameter and from the second parameter.

9. Device according to either one of claims 7 and 8, **characterised in that** it further comprises a system for transmitting a signal making it possible to know if the docking is correct.

10. Device according to any one of claims 7 to 9, **characterised in that** the tool for installing the dual-access fixing means (3, 4) comprises at least one of the first and second measurement means.

11. Device according to any one of claims 7 to 10, **characterised in that** the tool for installing the dual-access fixing means (3, 4) comprises the appropriate information processing means.

12. Device according to any one of claims 7 to 11, **characterised in that** one of the first element (1) and the second element (2) of the assembly comprises a tapped hole and constitutes at least one second part of the dual-access fixing means capable of cooperating with the first part of the dual-access fixing means.
